# EUROPÄISCHE PATENTSCHRIFT

(11) **EP 1 086 174 B1**
(45) Veröffentlichungstag und Bekanntmachung des Hinweises auf die Patenterteilung: **20.07.2005**
(21) Anmeldenummer: 99917844.5
(22) Anmeldetag: 20.03.1999
(51) Int. Cl.: C08K 9/06, C08J 3/215, C08L 21/00

(54) **PULVERFÖRMIGE, MODIFIZIERTE FÜLLSTOFFE ENTHALTENDE KAUTSCHUKPULVER, VERFAHREN ZU IHRER HERSTELLUNG UND VERWENDUNG**
POWDERY MODIFIED LOADING MATERIAL CONTAINING RUBBER POWDER, METHOD FOR THE PRODUCTION AND USE THEREOF
MATIERES DE CHARGE MODIFIEES SOUS FORME DE POUDRE, CONTENANT DE LA POUDRE DE CAOUTCHOUC, LEUR PROCEDE DE PRODUCTION ET LEUR UTILISATION

(30) Priorität: 17.04.1998 DE 19816972
(43) Veröffentlichungstag der Anmeldung: 28.03.2001
(73) Patentinhaber: PKU Pulverkautschuk Union GmbH, 45764 Marl (DE)
(72) Erfinder: GÖRL, Udo, D-53332 Bornheim (DE); STOBER, Reinhard, D-63594 Hasselroth (DE); LAUER, Hartmut, D-63628 Bad Soden-Salmünster (DE); ERNST, Uwe, D-45772 Marl (DE)
(86) Internationale Anmeldenummer: PCT/EP1999/001971
(87) Internationale Veröffentlichungsnummer: WO 1999/054397

(56) Entgegenhaltungen:
- EP-A- 0 753 549
- DE-A- 3 723 213
- US-A- 3 997 356
- US-A- 4 073 755

## Beschreibung

Die Erfindung betrifft pulverförmige, mit Organosilicumverbindungen modifizierte Füllstoffe enthaltende Kautschuke, ein Verfahren zu ihrer Herstellung und ihre Verwendung.

Über Ziel und Zweck des Einsatzes von Pulverkautschuken, sowie über mögliche Verfahren zu ihrer Herstellung ist eine Vielzahl von Publikationen erschienen.

Die Erklärung für das Interesse an pulverförmigen Kautschuken ergibt sich zwanglos aus der Verarbeitungstechnik der Gummiindustrie. Dort werden die Kautschukmischungen mit einem hohen Aufwand an Zeit, Energie und Personal hergestellt. Hauptgrund dafür ist, daß der Rohstoff Kautschuk ballenförmig vorliegt.

Die Zerkleinerung des Ballens, die innige Vermischung mit Füllstoffen, Mineralölweichmachern und Vulkanisationshilfsmitteln erfolgt auf Walzen oder in Innenmischern in mehreren Verfahrensstufen. Zwischen den Stufen wird die Mischung im allgemeinen gelagert. Den Innenmischern bzw. Walzen werden Extruder-Pelletizer oder Extruder-Rollerdies nachgeschaltet.
Aus dieser sehr aufwendigen Technik der KautschukVerarbeitung kann nur eine völlig neue Verarbeitungstechnologie herausführen.
Es wird daher seit längerem der Einsatz rieselfähiger Kautschukpulver diskutiert, weil sich damit die Möglichkeit ergibt, Kautschukmischungen wie thermoplastische Kunststoffpulver einfach und schnell verarbeiten zu können.

Aus der DE-PS 2822 148 ist ein Verfahren zur Herstellung eines pulverförmigen, füllstoffhaltigen Kautschuks bekannt.

Man setzt gemäß dieser Patentschrift einer Kautschuk-Latex, Kautschuk-Lösung oder der wäßrigen Emulsion eines Kautschuks eine wäßrige Füllstoffemulsion zu und fällt das gewünschte Kautschukpulver aus.
Um die nach diesem Verfahren erhaltenen, korngrößenabhängigen Füllstoffgehalte zu vermeiden, wurden Varianten angemeldet, die als DE-PS 3723 213 und DE-PS 3723 214 zum Stand der Technik gehören.
Gemäß DE-PS 3723213 wird in einem zweistufig ablaufenden Verfahren zuerst eine Menge ≥50 % des Füllstoffs in das Kautschukpulverpartikel integriert. Im zweiten Schritt wird der Rest des Füllstoffs auf das sogenannte Kautschukgrundkorn aufgezogen.
Dies kann als eine Variante des Puderns angesehen werden, da keine Bindung zwischen Füllstoff und Kautschuk entsteht.

Wie E.T. Italiaander (Vortrag 151. Technische Tagung der Rubber Div. der ACS, Anaheim, Kalifornien, 6. - 9. Mai 1997(GAK 6/1997 (50) 456-464)aber feststellt, ist ungeachtet der großen Zukunft, die im Delphi-Report (Delphi Report "Künftige Herstellverfahren in der Gummiindustrie" Rubber Journal, Vol. 154, Nr. 11, 20-34 (1972)) für pulverförmigen und granulierten Kautschuk vorausgesagt wurde, und zahlreicher Versuche, die von namhaften Polymerherstellern ab Mitte der siebziger Jahre bis in die frühen achtziger Jahre zur Herstellung von pulverförmigen NBR, SBR-Ruß-Masterbatches und granuliertem NR unternommen wurden, die Standard-Lieferform von Polymeren der Kautschukballen geblieben.

Ein Nachteil der bekannten Verfahren liegt zum einen darin, daß für die Einstellung des für die Qualität des Endprodukts als notwendig erachteten Korngrößendurchmessers der Füllstoffteilchen 10 µm ein Mahlvorgang notwendig ist.

Dieser bedingt aber nicht nur einen hohen Energieaufwand, sondern verursacht auch eine Schädigung der Füllstoffstruktur, die neben der aktiven Oberfläche eine wichtige Kenngröße für die Wirksamkeit in der Gummianwendung darstellt.

Zum anderen leidet die Handhabbarkeit der Produkte nach dem Stand der Technik darunter, daß die Partikel bei der Lagerung miteinander verkleben.

Aufgabe der Erfindung ist es, einen pulverförmigen, Füllstoff enthaltenden Kautschuk, der leicht handhabbar ist, ebenso wie ein Verfahren zu dessen Herstellung bereitzustellen.

Gegenstand der Erfindung ist ein pulverförmiger Kautschuk (Kautschukpulver), der mit einem durch das Fällverfahren fest mit der Kautschukmatrix verbundenen Füllstoff,die zumindest zum Teil durch Organosilicumverbindungen modifiziert sind. Eine Verwechslung mit nur oberflächlich (adhesiv) belegten Kautschukpartikeln (Stichwort: Pudern, Auffällen) ist damit nicht möglich.

Die erfindungsgemäßen Pulver weisen ein engeres und zu kleineren Teilchengrößen verschobenes Spektrum auf, als aus dem Stand der Technik hervorgeht (Kautschuk + Gummi + Kunststoffe 7, 28 (1975) 397-402). Dieser Umstand erleichtert die Verarbeitung der Pulver. Aufgrund des Herstellverfahrens findet sich auch kein korngrößenabhängiger Füllstoffanteil in den einzelnen Partikeln.
Die pulverförmigen Kautschuke enthalten von 20 bis 250 phr, insbesondere von 50 bis 100 phr Füllstoff (phr: parts per hundred parts of rubber),von dem zumindest ein Teil unter Verwendung der im Kautschuksektor bekannten Organosiliciumverbindungen Formel (I) an der Oberfläche modifiziert wurde.
Als Kautschuktypen geeignet haben sich folgende Spezies gezeigt, einzeln oder im Gemisch miteinander:
Naturkautschuk, Emulsions-SBR mit einem Styrolanteil von 10 bis 50 %, Butyl-Acrylnitril-Kautschuk.
Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Neben den genannten Kautschuken kommen folgende Elastomere, einzeln oder im Gemisch, in Frage:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenfalls auch chemisch modifizierter Naturkautschuk, wie z. B. epoxidierte Typen.
Als Füllstoffe werden im allgemeinen die aus der Kautschukverarbeitung bekannten Ruße und weißen Füllstoffe synthetischer Natur, wie z. B. gefällte Kieselsäuren oder natürliche Füllstoffe, wie z. b. Kieselkreide, Clays usw. zusätzlich verwendet.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 m²/g, einer CTAB-Zahl von 15 bis 600 m²/g, einer DBP-Adsorption von 30 bis 400 ml/100 g und einer 24 M4 DBP-Zahl von 50 bis 370 ml/100 g in einer Menge von 5 bis 250 Teilen, insbesondere 20 bis 150 Teilen, auf 100 Teile Kautschuk, insbesondere 40 bis 100 Teile.

Geeignet sind ebenso die aus dem Kautschuksektor bekannten gefällten Kieselsäuren.

Diese besitzen im allgemeinen eine nach der bekannten BET-Methode bestimmte N₂-Oberfläche von 35 bis 700 m²/g, eine CTAB-Oberfläche von 30 bis 500 m²/g, eine DBP-Zahl von 150 bis 400 ml/100g.
Das erfindungsgemäße Produkt enthält diese Kieselsäuren in einer Menge von 5 bis 250 Teilen, insbesondere 20 bis 100 Teilen, bezogen auf 1.00 Teile Kautschuk.

Handelt es sich um weiße Naturfüllstoffe , wie Clays oder Kieselkreiden mit einer N₂-Oberfläche von 2 bis 35 m²/g setzt man diesen in einer Menge von 5 bis 350 Teilen, bezogen auf 100 Teile Kautschuk, ein.

Geeignet sind auch füllstoffhaltige Kautschukpulver, die Kieselsäuren und Ruß im Gemisch enthalten.

Nicht modifizierte Füllstoffe der genannten Art sind nur zusätzlich zu den erfindungsgemäß modifizierten Füllstoffen in den hier beanspruchten Kautschukmischungen enthalten. Der Anteil der nicht modifizierten Füllstoffe hängt von der speziell herzustellenden Mischung ab.
In jedem Fall beläuft sich die Gesamtmenge an Füllstoff auf 20 bis 250 phr.
Diese besteht im allgemeinen zu 30 bis 100 %, bevorzugt 60 bis 100 %, aus den modifizierten Füllstoffen: Kieselsäure und/oder gegebenenfalls Ruß.
Für die Modifizierung der Oberflächen setzt man im allgemeinen Organosiliciumverbindungen der allgemeinen Formel

[R¹ ₙ₋(RO)₃₋ₙ Si-(Alk)ₘ-(Ar)ₚ] _{q} [B] (I),

R¹ ₙ (RO)₃₋ₙ Si-(Alk) (II),

oder

R¹ ₙ (RO)₃₋ₙ Si-(Alkenyl) (III)

eingesetzt,
in denen bedeuten
- B:: -SCN, -SH, -Cl, -NH₂ (wenn q = 1) oder -Sx- (wenn q = 2)
- R und R¹:: eine Alkylgruppe mit 1 bis 4 Kohlenstoffatomen, verzweigt oder nicht verzweigt, den Phenylrest, wobei alle Rest R und R¹ jeweils die gleiche oder eine verschiedene Bedeutung haben können, bevorzugt eine Alkylgruppe,
- R:: eine C₁-C₄-Alkyl, -C₁-C₄-Alkoxygruppe, verzweigt oder nicht verzweigt,
- n:: 0; 1 oder 2,
- Alk:: einen zweiwertigen geraden oder verzweigten Kohlenstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, daß p und n nicht gleichzeitig 0 bedeuten,
- x:: eine Zahl von 2 bis 8,
- Alkenyl :: einen einwertigen geraden oder verzweigten ungesättigten Kohlenwasserstoffrest mit 2 bis 20 Kohlenstoffatomen, bevorzugt 2 bis 8 Kohlenstoffatomen.

Beispiele für vorzugsweise eingesetzten Organosilane sind die z. B. nach der BE-PS 787 691 herstellbaren Bis(trialkoxysilyl-alkyl)oligosulfide wie Bis-(trimethoxy-, triäthoxy-, -trimethoxy- äthoxy-, -tripropoxy-, -tributoxy-, -tri-i-propoxy- und -tri-i-butoxy-silyl-methyl)-oligosulfide und zwar insbesondere die Di-, Tri-, Tetra-, Penta-, Hexasulfide usw., weiterhin Bis-(2-trimethoxy-, -triäthoxy-, -trimethoxyäthoxy-, -tripropoxy- und -tri-n-und -i-butoxy-äthyl)-oligosulfide und zwar insbesondere die Di-, Tri-, Tetra-, Penta-, Hexasulfide usw., ferner die Bis-(3-trimethoxy-, -triäthoxy-, - trimethoxyäthoxy-, -tripropoxy-, -tri-n-butoxy- und tri-i-butoxysilyl-propyl)-oligosulfide und zwar wiederum die Di-, Tri-, Tetrasulfide usw. bis zu Octasulfiden, des weiteren die entsprechenden Bis-(3-trialkoxysilylisobutyl)-oligosulfide, die entsprechen Bis-(4-trialkoxysilylbutyl)-oligosulfide. Von diesen ausgewählten, relativ einfach aufgebauten Organosilanen der allgemeinen Formel I werden wiederum bevorzugt die Bis-(3-trimethoxy-, -triäthoxy- und tripropoxysilylpropyl)oligosulfide, und zwar die Di-, Tri-, Tetra- und Pentasulfide, insbesondere die Triäthoxyverbindungen mit 2, 3 oder 4 Schwefelatomen und deren Mischungen. Alk bedeutet in der allgemeinen Formel I einen zweiwertigen, geraden oder verzweigten Kohlenwasserstoffrest, vorzugsweise einen gesättigten Alkylenrest mit gerader Kohlenstoffkette mit 1 bis 4 Kohlenstoffatomen.

Speziell geeignet sind auch die Silane mit der folgenden Strukturformel 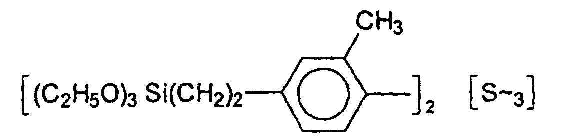 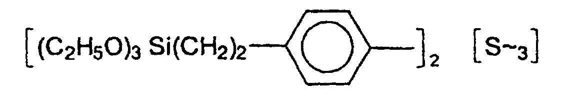 und deren Methoxianaloge, herstellbar nach der DE-AS 25 58191.

Als oberflächenaktiven Substanzen finden gegebenenfalls bevorzugt nichtionogene, kationische und anionische Tenside Verwendung. Ihre Konzentration in der Suspension beträgt 0,5 bis 15 Gew.-%, bevorzugt 0,5 bis 5 Gew.-%, bezogen auf die Menge an Füllstoff.

Beispiele für derartige Tenside sind Alkylphenolpolyglycolether, Alkylpolyglycolether, Polyglycole, Alkyltrimethylammoniumsalze, Dialkyldimtheylammoniumsalze, Alkylbenzyltrimethylammomiumsalze, Alkylbenzolsulfonate, Alkylhydrogensulfate, Alkylsulfate.

Auf diesem Weg kann man die gesamte, für die Herstellung vorteilhafter Kautschukmischungen und Vulkanisate notwendige Menge an Organosiliciumverbindungen über den modifizierten Füllstoff einarbeiten.
Es sind jedoch auch Verfahren durchführbar, in denen nur ein Teil der Organosiliciumverbindungen auf diesem Wege eingebracht wird, und der andere Teil wie üblich der Kautschukmischung zugesetzt wird.

Derartig modifizierte Füllstoffe werden z. B. in der EP-B 0442 143, der EP-B 0177 674 und insbesondere in Form von Granulaten in der EP-A 0795 579 (weiße Füllstoffe) bzw. in der EP-B 0519 188 (Ruß) beschrieben.

Als geeignet haben sich insbesondere die Bis(alkoxysilylalkyl)-oligosulfane des Typs Bis(trialkoxysilylpropyl)-tetrasulfan und -disulfan erwiesen.

Die aus den genannten Anmeldungen bzw. Patenten bekannten modifizierten Füllstoffe bzw. die dort genannten Organosilicumverbindungen werden ausdrücklich als Bestandteil der beanspruchten Zusammensetzungen mit in die vorliegende Anmeldung einbezogen

Die erfindungsgemäßen Kautschukpulver enthalten neben den bereits genannten Füllstoffen gegebenfalls bekannten Verarbeitungs- oder Vulkanisationshilfsmittel wie Zinkoxid, Zinkstearat, Stearinsäure, Polyalkohole, Polyamine, Weichmacher, Alterungsschutzmittel gegen Wärme, Licht oder Sauerstoff und Ozon,
Verstärkerharze, Flammschutzmittel wie z. B. Al(OH)₃ und Mg(OH)₂, Pigmente,
verschiedene Vernetzungschemikalien und gegebenfalls Schwefel in den gummitechnisch üblichen Konzentrationen.

Die erfindungsgemäßen Kautschukpulver unterscheiden sich im Schnittbild von den aus dem Stand der Technik bekannten Produkten.

In Abhängigkeit vom Füllungsgrad sind in die Oberfläche Füllstoffteilchen so eingebunden, daß ein Verkleben der Partikel auch unter Druck, wenn z. B. mehrere Säcke aufeinanderliegen, nicht erfolgt.

Diese "Inertisierung" der Oberfläche ist nicht zu verwechseln mit dem bekannten Pudern von klebrigen Pulvern mit Füllstoffen. Diese nur oberflächlich haftenden Füllstoffe werden bei der mechanischen Beanspruchung, z. B. in Förderanlagen oder beim Silieren schnell abgelöst.
Das Verkleben und Verklumpen der feinteiligen Pulver, das es zu verhindern gilt, tritt dann trotz des Puderns ein.
Im Unterschied zu den nach dem Stand der Technik bekannten, oberflächlich mit Füllstoffen als Fließhilfsmittel belegten klebrigen Partikeln handelt es sich erfindungsgemäß um eine Inkorporation von Füllstoffteilchen in die Oberfläche während des Fällprozesses zur Herstellung des pulverförmigen Kautschuks. In Abhängigkeit vom Füllungsgrad mit einem oder mehreren der oben genannten Füllstoffe wird die sinnvolle Verteilung zwischen Partikelinnerem und einen mit diesem verbundenen äußeren Bereich eingestellt.

Bei einem Produkt mit hohem Füllungsgrad (≥80 Teile Füllstoff pro hundert Teilen Kautschuk) sind im äußeren Kornbereich bevorzugt nur 1 bis 10 Teile dieser Füllstoffmenge eingebunden.
Enthält der pulverförmige Kautschuk jedoch insgesamt <80 Teile Füllstoff pro hundert Teilen Kautschuk, sind davon bevorzugt 10 bis 20 Teile im äußeren Kornbereich (Randbereich) gebunden, d. h. nicht durch die weniger wirksamen Adhäsionskräfte nur anhaftend.
Gegenstand der Erfindung ist ein Verfahren zur Herstellung füllstoffhaltiger Kautschukpulver, dadurch gekennzeichnet, dass sie fest mit der Kautschukmatrix verbundene mit Organosiliciumverbindungen der Formeln (I), (II) oder (III)

[R¹ ₙ-(RO)₃₋ₙSi-(Alk)ₘ-(Ar)ₚ]_{q}[B] (I),

R¹ ₙ(RO)₃₋ₙSi-(Alk) (II),

oder

R¹ ₙ(RO)₃₋ₙSi-(Alkenyl) (III)

in denen bedeuten
- B:: -SCN, -SH, -Cl, -NH₂ (wenn q = 1) oder-Sx- (wenn q = 2)
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können,
- R:: eine C₁-C₄-Alkyl, - C₁-C₄-Alkoxygruppe, verzweigt oder nicht verzweigt,
- n:: 0; 1 oder 2,
- Alk:: einen zweiwertigen geraden oder verzweigten Kohlenstoffrest mit 1 bis 6 Kohlenstoffatomen,
- m:: 0 oder 1
- Ar:: einen Arylenrest mit 6 bis 12 C-Atomen
- P:: 0 oder 1 mit der Maßgabe, dass p und n nicht gleichzeitig 0 bedeuten,
- x:: eine Zahl von 2 bis 8,
- Alkenyl:: einen einwertigen geraden oder verzweigten ungesättigten Kohlenwasserstoffrest mit 2 bis 20 Kohlenstoffatomen,
oder mit Bis(trialkoxysilylpropyl)-tetrasulfan oder -disulfan modifizierte Füllstoffe enthalten, durch Ausfällen aus wasserhaltigen Mischungen, die Füllstoff in Form von Suspensionen, wasserlösliche Salze eines Metalls der Gruppen IIa, IIb, IIIa und VIII des periodischen Systems der Elemente und einen Kautschuklatex oder wässrige Emuslionen einer Kautschuklösung enthalten durch Zusatz einer Säure, dadurch gekennzeichnet, dass man ≥ 50 Gew.-% des feinteiligen Füllstoffs, der zumindest zum Teil mit einer Organosiliciumverbindung gemäß Formel (I), (II) oder (III) an der Oberfläche modifizierte wurde, mit 0,1 bis 6,5 Gew.-Teilen pro 100 Gew.-Teile Kautschuk der genannten wasserlöslichen Salze und einem Kautschuklatex oder einer wässrigen Emulsion einer Kautschuklösung vermischt, den pH-Wert der Mischung auf einen Wert im Bereich von 5,5 bis 4,5 absenkt (erste Stufe), den restlichen Anteil des feinteiligen gegebenenfalls ebenso modifizierten weißen oder gegebenenfalls schwarzen Füllstoffs in Form einer Suspension zusetzt und den pH-Wert auf ca. 3,2 absenkt (zweite Stufe), so dass der in der Mischung befindliche Kautschuk zusammen mit dem Füllstoff vollständig ausgefällt wird.

Die von dem pH-Wert und dem Füllstoffgehalt abhängige Dauer und der Umfang des Ausfällvorgangs kann innerhalb einer Meßreihe einfach festgestellt werden.

Bei einem Pulverkautschuk mit hohem Füllungsgrad (≥80 Teile Füllstoff phr) wird man im allgemeinen 1 bis 10 Teile dieser Menge als restlichen Anteil in der zweiten Stufe bei der Ausfällung des Pulverkautschuks einsetzen.

Enthält der Pulverkautschuk weniger als 80 Teile Füllstoff phr, z. B. nur insgesamt 50 Teile phr, führt man vor dem Abschluß des Fällvorgangs noch >10 bis 20 Teile dieser Menge in Form einer Suspension in die Mischung ein.

Auf diese Weise werden die Füllstoffe in den äußeren Kornbereich (Randbereich) der Kautschulpulver eingebunden.

Diese Anteile des Füllstoffs sind damit nicht äußerlich auf die einzelnen Kautschukpartikel aufgezogen (s. DE-PS 37 23213), sondern in die Kautschukoberfläche integriert.

Diese Füllstoffverteilung und die Art der Bindung der Füllstoffe in der Kautschukmasse bewirken die hohe Fließfähigkeit der erfindungsgemäßen Pulver und verhindern das Verkleben während der Lagerung der Pulver, ohne daß diese Eigenschaften durch mechanische Belastungen beim Fördern, Silieren etc. verlorengehen.

Als Füllstoffe setzt man die obengenannten Ruße in feinteiliger Form (fluffy) ein, die im allgemeinen einen mittleren Korngrößendurchmesser von 1 bis 9 µm, vorzugsweise 1 bis 8 µm aufweisen, bevor sie suspendiert sind.

Dies erleichtert die Dispersion, so daß man ohne hohen Energieaufwand zu wäßrigen Suspensionen mit Füllstoffpartikeln eines mittleren Teilchendurchmessers deutlich kleiner als 10 µm gelangt.
Gefällte Kieselsäure kann vorteilhaft in Form eines salzfrei gewaschenen Filterkuchens eingesetzt werden.

Als Metallsalze kommen solche in Frage, die von Elementen der Gruppen IIa, IIb, IIIa und VIII des periodischen Systems der Elemente stammen. Diese Gruppeneinteilung entspricht der alten IUPAC-Empfehlung (siehe Periodisches System der Elemente, Verlag Chemie, Weinheim, 1985) Typische Vertreter sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums bevorzugt sind. Besonders bevorzugt ist Aluminiumsulfat.

Die Salze werden in einer Menge von 0,1 bis 6,5 Gewichtsteilen pro 100 Gewichtsteile Kautschuk eingesetzt. Zur Einstellung des definierten pH-Werte geeignete Säuren sind in erster Linie Mineralsäuren, wie z. B. Schwefelsäure, Phosphorsäure und Salzsäure, wobei die Schwefelsäure besonders bevorzugt ist. Eingesetzt werden können aber auch Carbonsäuren, wie z. B. Ameisen- und Essigsäure.

Die Menge an Säure richtet sich nach der Art und Menge des wasserlöslichen Metallsalzes, des Füllstoffs, des Kautschuks und des gegebenfalls vorhandenen Alkalisilikats. Sie läßt sich durch einige orientierende Versuche leicht ermitteln.

Nach einer bevorzugten Ausführungsform des erfindungsgemäßen Verfahrens werden zusätzlich noch bis zu 5 Gewichtsteile pro 100 Gewichtsteile Kautschuk Kieselsäure (SiO₂) in Form einer Alkalisilikatlösung, vorzugsweise als Wasserglas mit einem Na₂O: SiO₂-Molverhältnis von 2 : 1 bis 1 : 4, eingesetzt. Die Alkalisilikatlösung kann dabei sowohl der Kautschukkomponente als auch der Füllstoff-Suspension zugesetzt werden. Bevorzugt ist die Zugabe zur Kautschuk-komponente, besonders bei der kontinuierlichen Fahrweise.

Im allgemeinen wir das erfindungsgemäße Verfahren wie folgt durchgeführt:
Zunächst wird eine Füllstoff-Suspension in der Weise hergestellt, daß man einen Teil, vorzugsweise ≥50 %, des im Endprodukt enthaltenen, zumindest zum Teil an der Oberfläche modifizierten Füllstoffs zusammen mit dem Metallsalz und gegebenenfalls der Alkalisilikatlösung in Wasser dispergiert. Die Menge des insgesamt eingesetzten Wassers richtet sich nach der Art des Füllstoffs und dem Aufschlußgrad. Im allgemeinen liegen die nicht wasserlöslichen Bestandteile des Füllstoffs bei etwa 6 Gewichtsprozent. Dieser Wert stellt keine bindende Beschränkung dar und kann sowohl unter- als auch überschritten werden. Der maximale Gehalt wird durch die Pumpbarkeit der Suspension beschränkt.

Die so hergestellte Füllstoffsuspension wird anschließend mit dem gegebenfalls Alkalisilikatlösung enthaltenden Kautschuk-Latex oder der gegebenfalls Alkalisilikatlösung enthaltenden wäßrigen Emulsion einer Kautschuk-Lösung innig vermischt. Dazu eignen sich bekannte Rühraggregate, wie z. B. Propeller-Rührer.

Nach dem Vermischen wird unter Aufrechterhaltung des Rührvorganges mit Hilfe einer Säure zunächst ein pH-Wert im Bereich von 5,5 bis 4,5 eingestellt. Dabei fällt ein Kautschukgrundkorn mit einem konstanten Füllstoffgehalt an. Die Größe dieses Grundkorns wird durch die gewählte Metallsalzmenge im Bereich von 0,1 bis 6,5 phr gesteuert. Die Steuerung vollzieht sich so, daß mit der niedrigsten Menge an Metallsalz die größte Körnung erhalten wird.

Den restlichen Anteil des feinteiligen, gegebenenfalls ebenfalls modifizierten weißen Füllstoffs setzt man in Form einer Suspension zu und senkt den pH-Wert auf ca. 3,2 ab.

Der Feststoffgehalt der eingesetzten Latices beläuft sich im allgemeinen auf 20 bis 25 Gew.-%. Der Feststoffgehalt der Kautschuklösungen beträgt im allgemeinen 3 bis 35 Gew.-%, der der Kautschukemulsionen im allgemeinen 5 bis 30 Gew.-%.

Diese Gemische und ihre Herstellung sind aus dem Stand der Technik bekannt.

Für die Aufarbeitung von Kautschukpulvern mit Füllstoffgehalten ≥100 phr ist es vorteilhaft, vor der Phasentrennung den pH-Wert bis auf 2,5 abzusenken. Dazu wird zweckmäßigerweise eine Säure aus der vorher genannten Gruppe der Säuren verwendet.

Das erfindungsgemäße Verfahren kann sowohl diskontinuierlich als auch kontinuierlich durchgeführt werden.

Das ausgefällte Kautschukpulver wird vorteilhaft mit Hilfe einer Zentrifuge abgetrennt und dann auf einen Restwassergehalt von im allgemeinen ≤1 % getrocknet, insbesondere in einem Wirbelbettrockner.

Während des Herstellverfahrens können dem erfindungsgemäßen Kautschukpulver weitere Verarbeitungs- und/oder Vulkanisationshilfsmittel in einer Menge oder auch geringer zugesetzt werden, die vulkanisierbare Kautschukmischungen in der Regel enthalten.

Die erfindungsgemäßen Kautschukpulver werden zur Herstellung vulkanisierbarer Kautschukmischungen verwendet. Dabei können die zur Mischungsherstellung notwendigen Bestandteile sämtlich im Kautschukpulver enthalten sein. Bevorzugt enthalten diese jedoch Kautschuk der oben aufgeführten Typen und Füllstoffe. Sie können jedoch auch mit anderen Kautschuken und Füllstoffen konventionell vermischt werden, wenn dies für die gewünschte Kautschukmischung erforderlich ist.

Es gelingt erfindungsgemäß, feinteiliges, modifizierte Kieselsäure enthaltendes Kautschukpulver herzustellen, das rieselfähig ist und auch nach mechanischer Beanspruchung (z. B. Fördern, Verpacken) rieselfähig bleibt. Aufgrund seiner Feinteiligkeit sind keine Mahl- oder sonstige Zerkleinerungsmaßnahmen notwendig, um feinteilige Dispersionen zu erhalten.

Diese führen dann zu den feinteiligen Kautschukpulvern, die sich leicht verarbeiten lassen und zu Vulkanisaten mit verbesserten Eigenschaften.

### Beispiele

A. In den Beispielen werdne Verarbeitung und Eigenschaften von vulkanisierbaren Kautschukmischungen beschrieben, die
1. unter Verwendung eines erfindungsgemäß hergestellten Kautschukpulvers (enthaltend TESPTvormodifizierte Kieselsäure), und im Vergleich dazu
2. unter Einsatz einer mit TESPT vormodifizierter Kieselsäure hergestellten Kautschukmischung hergestellt wurden.

B. In den Beispielen verwendete Prüfnormen:

| | Einheit | Norm |
|---|---|---|
| Zugfestigkeit | Mpa | DIN 53504 |
| Bruchdehnung | % | DIN 53504 |
| Bruchenergie | [J] | |

C. In den Beispielen verwendete Chemikalien: TESPT
- TESPT: Bis(triethoxysilylpropyl)tetrasulfan(Si6 9) Degussa AG
- Naftolen ZD: Weichmacher, aromatische Kohlenwasserstoffe
- 6PPD: N-1,3-Dimethylbutyl-N'-phenylendiamin
- CBS: N-Cyclohexyl-2-benzo-thiazolsulfenamid
- Coupsil 8113: mit 11,3 Gew.-%, bezogen auf die Kieselsäure, an der Oberfläche modifizierte gefällte Kieselsäure
- Vulkanox 4020: Älterungsschutzmittel auf Basis Phenylendiamin
- Vulkacit CZ: Benzothiazyl-2-cyclohexylsulfenamid
- Vulkazit D: Diphenylguamidin
- Protektor G35P: Ozonschutzwachs

### Beispiel 1

Vergleich eines aus Pulverkautschuk hergestellten Vulkanisats mit einem Vulkanisat nach dem Stand der Technik

| a) | | |
|---|---|---|
| Rezeptur (phr) | (Basis E-SBR, TESPT-Gehalt, bezogen auf Kieselsäure: 11,3 %) | |
| | (1) | (2) |
| Pulverkautschuk | 156 | |
| Coupsil 8113 | | 56 |
| Buna SB 1500 | | 100 |
| Naftolen ZD | 3 | 3 |
| ZnO | 2 | 2 |
| Stearinsäure | 2 | 2 |
| Vulkanox 4020 | 1 | 1 |
| Protektor G35P | 1 | 1 |
| Schwefel | 1,5 | 1,5 |
| Vulkacit CZ | 1,7 | 1,7 |
| Vulkacit D | 2 | 2 |

| b) Anvulkanisationsverhalten (130°C) | | |
|---|---|---|
| | (1) | (2) |
| Scorch-Zeit (min) | 32,07 | 21,13 |
| Scorch-Zeit (min) | 41,57 | 26,3 |

| c) Zugversuch am Ring (DIN 53504) | | |
|---|---|---|
| | (1) | (2) |
| Zugfestigkeit (MPa) | 21 | 19,1 |
| Bruchdehnung (%) | 590 | 530 |
| Bruchenergie (I) | 161,7 | 135,6 |

| d) Dispersionstest | | |
|---|---|---|
| | (1) | (2) |
| Oberflächenrauhigkeit | 1940 | 2750 |

## Patentansprüche

1. Verfahren zur Herstellung füllstoffhaltiger Kautschukpulver
**dadurch gekennzeichnet,**
**dass** sie fest mit der Kautschukmatrix verbundene mit Organosiliciumverbindungen der Formeln (I), (II) oder (III)
[R¹ ₙ-(RO)₃₋ₙSi-(Alk)ₘ-(Ar)ₚ]_{q}[B] (I),
R¹ ₙ(RO)₃₋ₙSi-(Alk) (II),
oder
R¹ ₙ(RO)₃₋ₙSi-(Alkenyl) (III)
in denen bedeuten
B: -SCN, -SH, -Cl, -NH₂ (wenn q = 1) oder -Sx- (wenn q = 2)
R und R¹: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können,
R: eine C₁-C₄-Alkyl, - C₁-C₄-Alkoxygruppe, verzweigt oder nicht verzweigt,
n: 0; 1 oder 2,
Alk: einen zweiwertigen geraden oder verzweigten Kohlenstoffrest mit 1 bis 6 Kohlenstoffatomen,
m: 0 oder 1
Ar: einen Arylenrest mit 6 bis 12 C-Atomen
P: 0 oder 1 mit der Maßgabe, dass p und n nicht gleichzeitig 0 bedeuten,
x: eine Zahl von 2 bis 8,
Alkenyl: einen einwertigen geraden oder verzweigten ungesättigten Kohlenwasserstoffrest mit 2 bis 20 Kohlenstoffatomen,
oder mit Bis(trialkoxysilylpropyl)-tetrasulfan oder -disulfan
modifizierte Füllstoffe enthalten, durch Ausfällen aus wasserhaltigen Mischungen, die Füllstoff in Form von Suspensionen, wasserlösliche Salze eines Metalls der Gruppen IIa, IIb, IIIa und VIII des periodischen Systems der Elemente und einen Kautschuklatex oder wässrige Emuslionen einer Kautschuklösung enthalten durch Zusatz einer Säure, **dadurch gekennzeichnet,**
**dass** man ≥ 50 Gew.-% des feinteiligen Füllstoffs, der zumindest zum Teil mit einer Organosiliciumverbindung gemäß Formel (I), (II) oder (III) an der Oberfläche modifizierte wurde, mit 0,1 bis 6,5 Gew.-Teilen pro 100 Gew.-Teile Kautschuk der genannten wasserlöslichen Salze und einem Kautschuklatex oder einer wässrigen Emulsion einer Kautschuklösung vermischt, den pH-Wert der Mischung auf einen Wert im Bereich von 5,5 bis 4,5 absenkt (erste Stufe), den restlichen Anteil des feinteiligen gegebenenfalls ebenso modifizierten weißen oder gegebenenfalls schwarzen Füllstoffs in Form einer Suspension zusetzt und den pH-Wert auf ca. 3,2 absenkt (zweite Stufe), so dass der in der Mischung befindliche Kautschuk zusammen mit dem Füllstoff vollständig ausgefällt wird.

2. Verfahren zur Herstellung füllstoffhaltiger Kautschukpulver gemäß Anspruch 1,
**dadurch gekennzeichnet,**
**dass** die füllstoffhaltigen Kautschukpulver einen Gehalt an modifizierten und nichtmodifizierten Füllstoffen von 20 bis 250 phr aufweisen.

3. Verfahren zur Herstellung füllstoffhaltiger Kautschukpulver gemäß Anspruch 1 oder 2,
**dadurch gekennzeichnet,**
**dass** die füllstoffhaltigen Kautschukpulver als Füllstoff 5 bis 200 phr einer gefällten mit einer Organosiliciumverbindung nach Anspruch 1 modifizierten Kieselsäure aufweisen.

4. Verfahren zur Herstellung füllstoffhaltiger Kautschukpulver gemäß Anspruch 1 oder 2,
**dadurch gekennzeichnet,**
**dass** die füllstoffhaltigen Kautschukpulver als Füllstoff 20 bis 250 phr eines mit Organosiliciumverbindungen modifizierten und nicht modifizierten Ruß aufweisen.

5. Füllstoffhaltige Kautschukpulver gemäß einem oder mehreren der vorhergehenden Ansprüche
**dadurch gekennzeichnet,**
**dass** die füllstoffhaltigen Kautschukpulver als Füllstoffe modifizierte Kieselsäure, Ruß und nicht modifizierte Kieselsäure in einer Gesamtmenge von 5 bis 250 phr enthalten.

6. Verfahren gemäß Anspruch 1,
**dadurch gekennzeichnet**
**dass** man bei einem Gesamtanteil von ≥ 80 Teilen Füllstoff phr 1 bis 10 Teile dieser Menge als restlichen Anteil in der zweiten Stufe zusetzt.

7. Verfahren gemäß Anspruch 1,
**dadurch gekennzeichnet**
**dass** man bei einem Gesamtanteil von < 80 Teilen Füllstoff phr > 10 bis 20 Teile dieser Menge als restlichen Anteil in der zweiten Stufe zusetzt.

8. Verfahren gemäß einem der vorhergehenden Ansprüche,
**dadurch gekennzeichnet,**
**dass** man einen Ruß mit einer mittleren Teilchengröße von 1 bis 9 µm einsetzt.

9. Verfahren gemäß einem der vorhergehenden Ansprüche,
**dadurch gekennzeichnet,**
**dass** man zusätzlich Kieselsäure in Form eines salzfrei gewaschenen Filterkuchens einsetzt.

10. Verfahren gemäß einem der vorhergehenden Ansprüche,
**dadurch gekennzeichnet,**
**dass** man während der Ausfällung der Kautschukpulver weitere übliche Verarbeitungs- oder Vulkanisationshilfsmittel zusetzt.

11. Verfahren gemäß einem der vorhergehenden Ansprüche,
**dadurch gekennzeichnet,**
**dass** man als wasserlösliches Salz Aluminiumsulfat einsetzt.

12. Verfahren gemäß einem der vorhergehenden Ansprüche,
**dadurch gekennzeichnet,**
**dass** man in Gegenwart von Alkalisilikat arbeitet.

13. Verfahren nach Anspruch 12,
**dadurch gekennzeichnet,**
**dass** man bis zu 5 phr SiO₂ in Form von Akalisilikatlösung zusetzt.

14. Verfahren gemäß einem der vorhergehenden Ansprüche,
**dadurch gekennzeichnet,**
**dass** man bei der Herstellung von Kautschukpulvern mit Füllgraden ≥ 100 phr den pH-Wert vor der Phasentrennung bis auf 2,5 absenkt.

15. Verwendung der pulverförmigen füllstoffhaltigen Kautschukpulver gemäß den vorhergehenden Ansprüchen zur Herstellung vulkanisierbarer Kautschukmischungen.

## Claims

1. A process for producing a filled rubber powder,
**characterized in that**
the filled rubber powder contains, firmly bonded to the rubber matrix, a filler modified with an organosilicon compound of the formula (I), (II) or (III)
[R¹ ₙ-(RO)₃₋ₙSi-(Alk)ₘ-(Ar)ₚ]_{q}[B] (I),
R¹ ₙ(RO)₃₋ₙSi-(Alk) (II),
or
R¹ ₙ(RO)₃₋ₙSi-(Alkenyl) (III)
where
B is -SCN, -SH, -Cl, -NH₂ (if q = 1) or -Sₓ- (if q = 2).
R and R¹ are an alkyl group having from 1 to 4 carbon atoms, branched or unbranched, or the phenyl radical, where each radical R and R¹ may be identical or different,
R is a C₁-C₄-alkyl or C₁-C₄-alkoxy group, branched or unbranched,
n is 0, 1 or 2,
Alk is a bivalent, straight-chain or branched carbon radical having from 1 to 6 carbon atoms,
m is 0 or 1,
Ar is an arylene radical having from 6 to 12 carbon atoms,
p is 0 or 1 with the proviso that p and n are not simultaneously 0,
x is a number from 2 to 8,
Alkenyl is a monovalent, straight-chain or branched, unsaturated hydrocarbon radical having from 2 to 20 carbon atoms,
or a filler modified with bis(trialkoxysilylpropyl)tetrasulfane or with bis(trialkoxysilylpropyl)disulfane,
by adding an acid to bring about precipitation from an aqueous mixture which contains filler in the form of a suspension, contains a water-soluble salt of a metal of group. IIa, IIb, IIIa or VIII of the Periodic Table of the Elements, and contains a rubber latex or contains an aqueous emulsion of a rubber solution,
**characterized in that**
≥ 50% by weight of the fine-particle filler, which has been at least to some extent modified on its surface with an organosilicon compound as in formula (I), (II) or (III), is mixed with from 0.1 to 6.5 parts by weight of the water-soluble salts mentioned per 100 parts by weight of rubber and with a rubber latex or with an aqueous emulsion of a rubber solution, the pH of the mixture is lowered to a value within the range from 5.5 to 4.5 (first stage), the remainder of the fine-particle, if appropriate likewise modified, white or, if appropriate, black filler, in the form of a suspension, is added, and the pH is lowered to about 3.2 (second stage), so that the rubber present in the mixture is completely precipitated together with the filler.

2. A process for producing a filled rubber powder according to claim 1,
**characterized in that**
the filled rubber powder has from 20 to 250 phr content of modified and unmodified fillers.

3. A process for producing a filled rubber powder according to claim 1 or 2,
**characterized in that**
the filled rubber powder contains, as filler, from 5 to 200 phr of a precipitated silica modified with an organosilicon compound according to claim 1.

4. A process for producing a filled rubber powder according to claim 1 or 2,
**characterized in that**
the filled rubber powder contains, as filler, from 20 to 250 phr of an organosilicon-modified or unmodified carbon black.

5. A filled rubber powder according to one or more of the preceding claims,
**characterized in that**
the filled rubber powder contains, as filler, from 5 to 250 phr in total of modified silica, carbon black and unmodified silica.

6. A process according to claim 1,
**characterized in that**
when the total proportion of filler used is ≥ 80 parts phr, from 1 to 10 parts from this amount are added as remainder in the second stage.

7. A process according to claim 1,
**characterized in that**
when the total proportion of filler used is < 80 parts phr, from > 10 to 20 parts from this amount are added as remainder in the second stage.

8. A process according to any of the preceding claims,
**characterized in that**
use is made of a carbon black with an average particle size of from 1 to 9 µm.

9. A process according to any of the preceding claims,
**characterized in that**
use is additionally made of silica in the form of a filter cake washed until free from salts.

10. A process according to any of the preceding claims,
**characterized in that**
during the precipitation of the rubber powders other customary processing aids or other customary vulcanization auxiliaries are added.

11. A process according to any of the preceding claims,
**characterized in that**
aluminium sulphate is used as water-soluble salt.

12. A process according to any of the preceding claims,
**characterized in that**
operations are carried out in the presence of alkali metal silicate.

13. A process according to claim 12,
**characterized in that**
up to 5 phr of SiO₂ are added in the form of alkali metal silicate solution.

14. A process according to any of the preceding claims,
**characterized in that**
during preparation of a rubber powder with filler level ≥ 100 phr, the pH is lowered to 2.5 prior to phase separation.

15. The use of a pulverulent filled rubber powder according to any of the preceding claims for producing vulcanizable rubber mixtures.

## Revendications

1. Procédé de fabrication de poudres de caoutchouc contenant des charges,
**caractérisé en ce qu'**
elles contiennent des charges modifiées, solidement liées à la matrice de caoutchouc avec des composés d'organo-silicium de formules (I), (II) ou (III),
[R¹ ₙ-(RO)₃₋ₙSi-(Alc)ₘ-(Ar)ₚ]_{q}[B] (I),
R¹ ₙ(RO)₃₋ₙSi-(Alc) (II),
ou
R¹ ₙ(RO)₃₋ₙSi-(Alcényl) (III)
dans lesquelles
B : représente -SCN, -SH, -Cl, -NH₂ (lorsque q = 1) ou -Sx- (lorsque q = 2)
R et R¹ : représentent un groupe alkyle comportant de 1 à 4 atomes de carbone, ramifié ou non ramifié, le radical phényle, tous les radicaux R et R¹ pouvant avoir à chaque fois une signification identique ou différente,
R : représente un groupe alkyle en C₁ à C₄, un groupe alcoxy en C₁ à C₄, ramifié ou non ramifié,
n : vaut 0, 1 ou 2,
Alc : représente un radical carboné droit ou ramifié bivalent comportant de 1 à 6 atomes de carbone,
m : vaut 0 ou 1,
Ar : représente un radical arylène comportant de 6 à 12 atomes de carbone
p: vaut 0 ou 1, sous réserve que p et n ne valent pas simultanément 0,
x : représente un nombre allant de 2 à 8,
Alcényle :représente un radical hydrocarboné insaturé à chaîne droite ou ramifiée monovalent comportant de 2 à 20 atomes de carbone,
ou avec du bis(trialcoxysilylpropyl)-tétrasulfane ou -disulfane, par précipitation à partir de mélanges aqueux qui contiennent la charge sous forme de suspensions de sels solubles dans l'eau d'un métal des groupes IIa, IIb, IIIa et VIII du système périodique des éléments, et un latex de caoutchouc ou des émulsions aqueuses d'une solution de caoutchouc, par addition d'un acide,
**caractérisé en ce qu'**
on mélange ≥ 50 % en poids de la charge finement divisée, qui a été modifiée au moins en partie avec un composé d'organo-silicium selon la formule (I), (II) ou (III) à sa surface, avec de 0,1 à 6,5 parties en poids pour 100 parties en poids de caoutchouc des sels solubles dans l'eau mentionnés et avec un latex de caoutchouc ou une émulsion aqueuse d'une solution de caoutchouc,
on abaisse le pH du mélange à une valeur située dans un intervalle allant de 5,5 à 4,4 (première étape),
on ajoute la fraction restante de la charge finement divisée, blanche ou le cas échéant noire, le cas échéant égalentent modifiée, sous la forme d'une suspension, et
on abaisse le pH à environ 3,2 (seconde étape), si bien que le caoutchouc qui se trouve dans le mélange est entièrement précipité avec la charge.

2. Procédé de fabrication de poudres de caoutchouc contenant des charges selon la revendication 1,
**caractérisé en ce que**
les poudres de caoutchouc contenant des charges présentent une teneur en charges modifiées et non modifiées de 20 à 250 phr.

3. Procédé de fabrication de poudres de caoutchouc contenant des charges selon la revendication 1 ou 2,
**caractérisé en ce que**
les poudres de caoutchouc contenant des charges présentent comme charge de 5 à 200 phr d'un acide silicique modifié précipité avec un composé d'organo-silicium selon la revendication 1.

4. Procédé de fabrication de poudres de caoutchouc contenant des charges selon la revendication 1 ou 2,
**caractérisé en ce que**
les poudres de caoutchouc contenant des charges présentent comme charge de 20 à 250 phr d'un noir de fumée modifié avec des composés d'organo-silicium et non modifié.

5. Poudre de caoutchouc contenant des charges selon une ou plusieurs des revendications précédentes,
**caractérisée en ce que**
les poudres de caoutchouc contenant des charges contiennent comme charges de l'acide silicique modifié, du noir de fumée et de l'acide silicique non modifié en une quantité totale de 5 à 250 phr.

6. Procédé selon la revendication 1,
**caractérisé en ce que**
si la proportion totale de charge est ≥ 80 parties phr, on ajoute > 1 à 10 parties de cette quantité comme fraction résiduelle dans la seconde étape.

7. Procédé selon la revendication 1,
**caractérisé en ce que**
si la proportion totale de charge est < 80 parties phr, on ajoute > 10 à 20 parties de cette quantité comme fraction résiduelle dans la seconde étape.

8. Procédé selon l'une des revendications précédentes,
**caractérisé en ce qu'**
on utilise un noir de fumée ayant une granulométrie moyenne de 1 à 9 µm.

9. Procédé selon l'une des revendications précédentes,
**caractérisé en ce qu'**
on utilise en outre de l'acide silicique sous la forme d'un gâteau de filtration débarrassé de sel par lavage.

10. Procédé selon l'une des revendications précédentes,
**caractérisé en ce qu'**
au cours de la précipitation de la poudre de caoutchouc on ajoute d'autres adjuvants de traitement ou de vulcanisation habituels.

11. Procédé selon l'une des revendications précédentes,
**caractérisé en ce que**
comme sel soluble dans l'eau on utilise le sulfate d'aluminium.

12. Procédé selon l'une des revendications précédentes,
**caractérisé en ce qu'**
on travaille en présence de silicate de métal alcalin.

13. Procédé selon la revendication 12,
**caractérisé en ce qu'**
on ajoute jusqu'à 5 phr de SiO₂ sous la forme d'une solution de silicate de métal alcalin.

14. Procédé selon l'une des revendications précédentes,
**caractérisé en ce que**
dans la fabrication des poudres de caoutchouc avec des degrés de charge ≥ 100 phr on abaisse le pH jusqu'à 2,5 avant la séparation de phases.

15. Utilisation des poudres de caoutchouc pulvérulentes contenant des charges selon les revendications précédentes, pour la fabrication de mélanges de caoutchouc vulcanisables.
